# EUROPÄISCHE PATENTSCHRIFT

(11) **EP 0 618 385 B1**
(45) Veröffentlichungstag und Bekanntmachung des Hinweises auf die Patenterteilung: **18.12.1996**
(21) Anmeldenummer: 94104273.1
(22) Anmeldetag: 18.03.1994
(51) Int. Cl.: F16J 15/06, F16B 41/00, F16F 1/37

(54) **Schallentkoppelndes Verbindungselement**
Connection element for decoupling of sound
Elément de connection pour découplage de bruit

(30) Priorität: 27.03.1993 DE 4310002
(43) Veröffentlichungstag der Anmeldung: 05.10.1994
(73) Patentinhaber: Kamax-Werke Rudolf Kellermann GmbH & Co. KG, D-37520 Osterode (DE)
(72) Erfinder: Damm, Klaus, Dr.-Ing., D-35315 Homberg/Ohm (DE); Mages, Walter J., Dr.-Ing., D-36304 Alsfeld (DE); Sommer, Wolfgang, Dipl.-Ing., D-35285 Gemünden (DE)
(74) Vertreter: Rehberg, Elmar, Dipl.-Ing.

(56) Entgegenhaltungen:
- EP-A- 0 389 783
- WO-A-89/08212
- GB-A- 2 056 793
- US-A- 4 784 396
- US-A- 4 884 723
- US-A- 5 094 579

## Beschreibung

Die Erfindung bezieht sich auf ein schallentkoppelndes Verbindungselement für zwei Teile unter Zwischenschaltung einer Dichtung, insbesondere zur Befestigung eines Zylinderkopfdeckels auf einem Zylinderkopf, mit einer einen Kopf oder einen Mittelbund aufweisenden Schraube, die eine Unrundfläche zum Ansatz eines Schraubwerkzeuges, einen Schaft mit einem Gewindeabschnitt und eine sich radial erstreckende und in der End-Einschraubstellung auf eine Gegenfläche, insbesondere am Zylinderkopf, anlegende Abstützfläche aufweist, und mit einem schallisolierenden hülsenartigen Formkörper aus elastomerem Material, wobei der Formkörper an der Schraube in vormontiertem Zustand des Verbindungselementes über einen Anschlag und einen Gegenanschlag begrenzt axial beweglich und dabei doch unverlierbar gehalten ist. Das Verbindungselement wird insbesondere im Automobilbau angewendet, beispielsweise zwischen Zylinderkopfdeckel und Zylinderkopf, zwischen einem Motorblock und einer zugehörigen Ölwanne usw.. Es läßt sich aber überall dort anwenden, wo zwei Teile unter Zwischenschaltung einer Dichtung schallentkoppelt miteinander verbunden werden müssen.

Ein schallentkoppelndes Verbindungselement der eingangs beschriebenen Art ist aus der US-PS 5 094 579 bekannt. Das Verbindungselement dient zum Verbinden zweier Teile unter Zwischenschaltung einer Dichtung. Das Verbindungselement selbst weist eine Schraube, eine Unterlegscheibe und einen Formkörper aus elastomerem Material, insbesondere Gummi, auf; das Verbindungselement besteht damit aus drei Teilen. Der Formkörper des Verbindungselementes besitzt eine mittige Durchbrechung und einen Flansch, der sich an der einen Außenfläche des einen der beiden zu verbindenden Teile auflegt. Der Formkörper weist einen Fortsatz auf, mit welchem er in eine Durchbrechung des einen der zu verbindenden Teil einragt. Er besitzt auf seinem äußeren Umfang eine Ausnehmung, mit welcher er in die Stufe einer gestuften Bohrung im ersten Teil eingeschnappt werden kann. Das freie Ende des Fortsatzes liegt dann zwischen den beiden Oberflächen des ersten der beiden miteinander zu verbindenden Teile. Der Formkörper weist mittig eine Durchbrechung auf, durch die die Schraube hindurchgreift. Etwa im Übergangsbereich zwischen dem Gewindeabschnitt des Schaftes der Schraube und dem gewindelosen Teil des Schaftes der Schraube ist ein radial nach außen vorstehender Bund vorgesehen, dessen Außendurchmesser so gemessen ist, daß er mit Spiel durch die Durchbrechung im Formkörper hindurchgreift. An dem dem Kopf der Schraube zugekehrten Ende des Formkörpers, an welchem die Unterlegscheibe aufliegt, besitzt der Formkörper einen Anschlag, der mit dem als Gegenanschlag wirkenden Bund der Schraube in der Weise zusammenarbeitet, daß damit die Schraube gegenüber dem Formkörper axial begrenzt beweglich ist und die drei Teile als vormontierte Einheit aneinandergehalten sind, so daß die Schraube am Formkörper unverlierbar gehalten ist. Das Verbindungselement aus Schraube, Unterlegscheibe und Formkörper kann somit vormontiert und als Einheit zugeliefert werden. Es ist dann lediglich noch erforderlich, den Formkörper der Einheit in die stufenartige Durchbrechung des ersten Teils einzuklipsen und letztendlich die Schraube anzuziehen. Als vormontierte Einheit wie auch in der an das eine Teil angesetzten Stellung ist die Schraube an dem Formkörper zwar unverlierbar, jedoch nur lose gehalten, so daß die Schraube gegenüber dem Formkörper eine undefinierte Relativlage einnimmt. Dies ist insbesondere bei Überkopf- oder Schrägmontage der Fall. Die Schraube kann mit ihrer Achse in dem Formkörper verkippen und sich je nach ihrer Relativlage zu Schwerkraftachse von selbst verlagern. Beim Einschrauben der Schraube in das Gewinde, welches im zweiten der beiden miteinander zu verbindenden Teile angeordnet ist, durchstößt die Schraube mit ihrer Spitze und dem Gewindeschaft eine Dichtung. Dies hat nicht nur den Nachteil, daß Bestandteile der Dichtung in das Gewinde eindringen und den weiteren Einschraubvorgang be- oder verhindern können; noch nachteiliger ist es, daß sich dabei der mittlere Bund am Schaft der Schraube auf die durchstoßene Dichtung aufsetzt und diese komprimiert. Es entsteht damit eine nicht reproduzierbare und nicht festgelegte End-Einschraubstellung, in welcher die Schraube die beiden miteinander zu verbindenden Teile mehr oder weniger festhält und dabei auch den Formkörper komprimiert. Während dieser Komprimierung kommt der Anschlag am Formkörper, der den Hub der begrenzten axialen Beweglichkeit der Schraube gegenüber dem Formkörper festlegt, in Anlage an dem Schaft der Schraube, so daß hier eine Abdichtung erzielt wird, die es ermöglicht, die Schraube in einem von der Dichtung umschlossenen Bereich einzusetzen. Andererseits besteht die Möglichkeit, daß sich der im Mittelbereich des Schaftes der Schraube vorgesehene Bund auf der Oberfläche des zweiten der beiden miteinander zu verbindenden Teile abstützt. Hierzu müßte allerdings die Dichtung mit einer dem Außendurchmesser des Bundes entsprechenden Durchbrechung versehen sein. In dieser Ausführungsform wird dann auch eine reproduzierbare End-Einschraubstellung erreicht, in der durch die Bemessung der verschiedenen Teile einerseits eine reproduzierbare Vorspannkraft auf die Schraube aufgebracht werden kann und andererseits der Formkörper reproduzierbar komprimiert wird und damit die beiden Teile zusammenspannt. In beiden Ausführungsformen besteht keine Möglichkeit, eine vormontierte Einheit zu schaffen, bei der das eine der beiden zu verbindenden Teile, die verschiedenen eingesetzten Verbindungselemente und die Dichtung zu einer vormontierten Einheit zusammengefügt werden können. Eine solche vormontierte Einheit unter Einschluß der Dichtung könnte nur dadurch geschaffen werden, daß die Dichtung weitergebildet und mit einer Durchbrechung für die Schraube jedes Verbindungselementes versehen wird, deren Durchmesser so bemessen ist, daß er in einen Einstich zwischen dem Bund und dem Gewindeschaft der Schraube eingreifen kann. Bildet man den Gegenstand der US-PS 5 094 579 in dieser aufgezeigten Richtung weiter, so sind damit zwangsläufig zwei Nachteile verbunden: Zum einen geht die begrenzte axiale Beweglichkeit der Schraube relativ zum Formkörper verloren, und zum anderen lassen sich reproduzierbare End-Einschraubstellungen nicht erreichen. Im übrigen ginge auch dann, wenn die Verbindungselemente gelöst werden, der Zusammenhalt mit der Dichtung verloren.

Ein zu einer Einheit aus drei Teilen vormontierbares Verbindungselement, welches allerdings keine schallentkoppelnde Wirkung erbringt, ist aus der EP 0 272 642 A2 bekannt. Das Verbindungselement besteht aus einer Kopfschraube, einer Hülse mit Kragen und einem Formkörper aus elastomerem Material. Zwischen der Hülse und der Schraube sind auch hier Anschläge und Gegenanschläge gebildet, mit deren Hilfe die Schraube relativ zur Hülse axial begrenzt beweglich und unverlierbar angeordnet ist. Die Hülse wird in eine Durchbrechung des Formkörpers eingesetzt. Dies kann auch gleichzeitig mit einer Verankerung in dem einen der beiden miteinander zu verbindenden Teile geschehen. Eine Dichtung zwischen den beiden miteinander zu verbindenden Teilen ist nicht vorgesehen, so daß die beiden Teile mit ihrem einander zugekehrten Oberflächen direkt aufeinander gespannt werden. Dabei kann sich die Hülse auf der Oberfläche des zweiten der beiden miteinander zu verbindenden Teile aufsetzen und abstützen, so daß über diese Hülse eine reproduzierbare Kompression des Formkörpers erzielt wird. Die Anschläge an der Schraube sind durch vorstehende Nocken gebildet, über die eine Verengungsstelle am Kragen der Hülse schnappend übertreten kann, wenn die beiden Teile zusammengefügt werden. Auch hierbei ist der Hub der begrenzten Beweglichkeit durch Anschlag und Gegenanschlag festgelegt.

Die Schraube kann aber ansonsten gegenüber der Hülse entsprechend dem gegebenen Spiel verkippt werden, so daß sie bezüglich des Gegengewindes in dem zweiten der beiden miteinander zu verbindenden Teile nicht geführt wird. Auch eine Überkopfmontage ist insofern erschwert, als beim Loslassen der Schraube diese selbsttätig in Schwerkraftrichtung den zulässigen Hub der begrenzten Beweglichkeit ausführt. Der Kragen an der Hülse erstreckt sich in radialer Richtung derart, daß sein Außendurchmesser mit dem Außendurchmesser des Formkörpers fluchtet, während der Kopf der Schraube eine in üblicher Weise bemessene Kopfauflagefläche trägt. Über den Kragen der Hülse wird dann die Kompressionskraft der Schraube auf den Formkörper übertragen. Die Schaffung eines Verbindungselementes aus drei Teilen stellt auch hier einen entsprechenden Aufwand dar.

Der Erfindung liegt die Aufgabe zugrunde, ein schallentkoppelndes Verbindungselement der eingangs beschriebenen Art bereitzustellen, welches aus möglichst wenig Teilen besteht, eine Vormontage mehrerer solcher Verbindungselemente am einen der beiden miteinander zu verbindenden Teile unter Einschluß einer Dichtung zuläßt und eine erleichterte Montage und Demontage an dem anderen Teil möglich macht.

Erfindungsgemäß wird dies bei dem Verbindungselement der eingangs beschriebenen Art dadurch erreicht, daß der Formkörper eine solche axiale Länge aufweist, daß er im in das erste Teil eingesetzten Zustand mit einem an ihm vorgesehenen Fortsatz das erste Teil in Richtung auf die Dichtung überragt, daß der Fortsatz des Formkörpers eine Ausnehmung zum unverlierbaren Einsetzen der Dichtung aufweist, und daß zwischen dem Formkörper und der Schraube mindestens eine Reibflächenpaarung vorgesehen ist, die über den Hub der axial begrenzten Beweglichkeit die Schraube in jeder Stellung festhält und ausrichtet.

Durch die Erfindung wird die Möglichkeit geschaffen, die Dichtung am Formkörper zu halten, sobald der Formkörper in das erste der beiden zu verbindenden Teile eingesetzt ist. Damit ergibt sich die Möglichkeit, die Dichtung unabhängig von dem Einschraub- oder Lösezustand der Schraube zu halten. Die Schrauben der Verbindungselemente können ohne weiteres in ihrer Mehrzahl durch einen Mehrfachschraubkopf bei der Erstmontage zeitgleich angezogen werden, wie dies in Automobilfabriken üblich ist. Es ergibt sich aber auch der weitere Vorteil, daß z. B. in einer Reparaturwerkstatt eine Schraube nach der anderen gelöst werden können, ohne daß dabei die Dichtung von dem einen der beiden zu verbindenden Teile abfällt. Die Dichtung verbleibt vielmehr geschützt und unbeeinträchtigt an dem einen der beiden Teile und ist damit für eine Wiederverwendung brauchbar. Beim Zusammenfügen der vormontierten Einheit aus den Verbindungselementen, dem ersten Teil und der Dichtung läßt sich die Dichtung an den Fortsätzen des Formkörpers in einer dort vorgesehene Ausnehmung einklipsen. Zu diesem Zweck weist die Dichtung entsprechend bemessene und angeordnete Durchbrechungen auf.

Durch mindestens eine Reibflächenpaarung, die über den Hub der axial begrenzten Beweglichkeit Reibung zur Verfügung stellt, wird die Bildung der vormontierten Einheiten und die Montage und Demontage erheblich erleichtert. Die Reibflächenpaarung erfüllt Doppelfunktion: Zum einen sorgt sie dafür, daß die Schraube relativ zum Formkörper in jede Zwischenstellung ihres axial begrenzten Hubes gebracht bzw. gedrückt werden kann und nach dem Loslassen diese Zwischenstellung beibehält. Zum anderen übt die Reibflächenpaarung in jeder dieser Stellungen eine Ausrichtwirkung bezüglich der Achse der Schraube aus, so daß diese nicht mehr undefiniert abkippen kann, sondern ausgerichtet, wenn auch begrenzt nachgiebig durch das elastomere Material des Formkörpers relativ zu der Achse des Gegengewindes in dem zweiten der miteinander zu verbindenden Teile ausgerichtet wird, vorausgesetzt, daß die Teile bestimmungsgemäß bearbeitet sind. So ist es beispielsweise möglich, die Schraube an jedem Verbindungselement entsprechend der begrenzten axialen Beweglichkeit aus jedem Formkörper herauszuziehen, so daß die freien Enden des Gewindeschaftes jeder Schraube hinter das freie Ende des Fortsatzes jedes Formkörpers oder zumindest gegenüber der Auflagefläche der Dichtung auf dem zweiten Teil zurücktreten; das vormontierte erste Teil kann dann in diesem Zustand auf das zweite Teil aufgesetzt werden, wobei keine Gefahr besteht, daß die insbesondere geschliffene Oberfläche des zweiten Teiles von den Schrauben beeinträchtigt würde. Jede Schraube wird mit ihrer Achse ausgerichtet auch bereits in dieser Stellung gehalten. Es ist dann möglich, nach diesem Aufsetzen des vormontierten ersten Teils mit der Dichtung die Schrauben der Verbindungselemente axial in den jeweiligen Formkörper weiter einzuschieben. Auch dabei bleibt die Ausrichtwirkung erhalten, und die freien Enden der Gewindeabschnitte der Schrauben fädeln erleichtert in das jeweilige Gegengewinde im zweiten der miteinander zu verbindenden Teile ein. Eine robotergerechte Montage ist möglich, wobei das weitere Einschieben und das Eindrehen der Schrauben auch durch einen Mehrfachschraubspindler in einem Arbeitsgang erfolgen können.

Bei dem neuen Verbindungselement wird auch eine reproduzierbare End-Einschraubstellung erreicht, weil im Mittelbereich des Schaftes der Schraube eine sich radial erstreckende Abstützfläche gebildet ist, die sich auf der Gegenfläche abstützt, die von der Oberfläche des zweiten der beiden miteinander zu verbindenden Teile gebildet wird. Damit wird zugleich auch eine reproduzierbare Komprimierung des Formkörpers erreicht. Die beiden miteinander zu verbindenden Teile werden reproduzierbar zusammengespannt und dennoch schallentkoppelnd zueinander gehalten.

Das neue Verbindungselement weist den weiteren Vorteil auf, daß es nur aus zwei Einzelteilen besteht. Zudem ist es jederzeit in seine Einzelteile demontierbar, so daß defekte Einzelteile ausgetauscht werden können, ohne andere Einzelteile zwangläufig mit zerstören zu müssen.

Das neue Verbindungselement bietet auch erhebliche Vorteile bei der Überkopfmontage oder in Schrägstellung, beispielsweise an einem V-Motor. Unabhängig von der Wirkrichtung der Schwerkraft wird die Schraube an jedem Verbindungselement durch den Formkörper ausgerichtet geführt, so daß die Schraube sehr viel leichter das Gegengewinde im zweiten der beiden miteinander zu verbindenden Teile findet als im Stand der Technik. Es besteht auch nicht die Gefahr, daß die Schrauben in den Formkörpern verkippen können oder selbsttätig ihre Lage verändern. Andererseits ist die ausgerichtete Führung in dem Formkörper aus elastomerem Material zu entsprechendem Grade nachgiebig, so daß damit Toleranzen ausgeglichen werden können und trotzdem die Schraube - auch bei Robotermontage - ihr Gegengewinde im zweiten Teil findet.

Die Reibflächenpaarung zum nachgiebigen Ausrichten der Achse der Schraube und zum Festhalten in jeder Stellung sollte eine gewisse axiale Erstreckung, also eine gewisse axiale Länge aufweisen, über die Schraube und Formkörper während des Hubes der axial begrenzten Beweglichkeit aneinander geführt sind. Diese axiale Erstreckung bestimmt zugleich in Verbindung mit der Oberflächengüte der Reibflächenpaarung die Reibung, die so bemessen ist, daß sie die Schraube in jeder Zwischenstellung selbsttätig festhält und zumindest die einwirkende Schwerkraft nicht zu einer selbsttätigen Veränderung dieser Stellung führen kann. Die Reibung kann natürlich auch noch etwas höher gewählt werden, um beispielsweise sicherzustellen, daß während eines Transportes oder einer Förderung der vormontierten Einheiten auftretende Kräfte nicht zu einer Verschiebung der Schraube relativ zu ihrem Formkörper führen kann.

Die Reibflächenpaarung ist immer zwischen Schraube und Formkörper vorgesehen, und zwar ohne Einschaltung irgendwelcher weiteren Teile. Je nach der geometrischen Ausbildung und Anordnung kann die Reibflächenpaarung jedoch an unterschiedlichen Stellen angeordnet werden, die sich im wesentlichen dadurch unterscheiden, daß die Reibflächenpaarung in unterschiedlicher Entfernung - je nach Anwendungsfall - zur Dichtungsebene zu liegen kommt.

Es ist auch möglich, zwischen dem Formkörper und der Schraube eine zweite Reibflächenpaarung vorzusehen, die zusätzlich zu der ersten Reibflächenpaarung vorgesehen ist. Damit ergibt sich die Möglichkeit, die axiale Länge einer Reibflächenpaarung zu verkürzen und gleichsam auf zwei Reibflächenpaarungen aufzuteilen. Dabei ist es zweckmäßig, daß die beiden Reibflächenpaarungen durchaus einen Abstand voneinander aufweisen. In diesem Falle erfolgt eine noch bessere und genauere Ausrichtung der Achse der Schraube relativ zur Achse des Formkörpers in jeder Stellung über den gesamten Hub der begrenzten axialen Beweglichkeit. Die beiden Reibflächenpaarungen können auch so ausgebildet und angeordnet sein, daß sie beim Einführen der Schraube in den Formkörper nacheinander zur Wirkung kommen, so daß der Monteur letztlich gefühlsmäßig zwei Reibwerte unterscheiden kann, um hieran bereits zu erkennen, wie weit die Schraube in dem Formkörper verlagert bzw. eingeschoben worden ist.

Die Schraube kann etwa im Mittelbereich ihres Schaftes einen angestauchten Wulst aufweisen, der einerseits einen Bestandteil der Reibflächenpaarung und andererseits die Abstützfläche für die reproduzierbare End-Einschraubstellung bildet. Die Wulst erfüllt damit zwei Funktionen. Sie bildet einerseits die Abstüztfläche, die sich an einer Gegenfläche, insbesondere am Zylinderkopf, in der End-Einschraubstellung anlegt. Zum anderen arbeitet die Wulst mit axialen Flächenbereichen mit der Durchbrechung im Formkörper im Sinne der einen oder anderen Reibflächenpaarung zusammen. Anschlag und Gegenanschlag für die unverlierbare Anordnung der Schraube im Formkörper können zusätzlich vorgesehen sein. Es ist aber auch möglich, - bei allen Ausführungsformen - auf Anschlag und Gegenanschlag zu verzichten und die Reibung einer Reibflächenpaarung letztlich auch dazu auszunutzen, um die Schraube unverlierbar am Formkörper zu halten; freilich kann die Schraube vom Formkörper gelöst werden, wenn sie soweit aus diesem herausgezogen wird, daß der Kontakt der Flächen in der Reibflächenpaarung aufgehoben wird.

Anstelle einer im Durchmesser gegenüber dem gewindelosen Teil des Schaftes der Schraube vorspringenden Wulst kann die Schraube etwa im Mittelbereich ihres Schaftes auch lediglich einen Absatz aufweisen, der eine Stufe bildet, wobei die Stufe dann die Abstützfläche darstellt. Es genügt hier ein einfacher Durchmessersprung, der freilich so ausgebildet und angeordnet sein muß, daß der gewindelose Teil des Schaftes der Schraube im Vergleich zum Gewindeschaft den größeren Durchmesser aufweist.

Der Hub der begrenzten axialen Beweglichkeit zwischen Schraube und Formkörper kann größer als die Einschraublänge der Schraube ausgebildet sein, damit das freie Ende der Schraube innerhalb des Hubes der begrenzten axialen Beweglichkeit und ohne daß die Unverlierbarkeit aufgehoben wird, zurückgezogen werden kann. Das freie Ende der Schraube ist dann zumindest gegenüber der Auflageebene der Dichtung auf dem zweiten Teil zurückversetzt.

Die am Formkörper vorgesehene Ausnehmung zur Bildung einer die Dichtung einschließenden vormontierten Einheit aus Verbindungselement, erstem Teil und Dichtung kann eine umlaufende radial nach außen offene Rille auf dem Außenumfang des Fortsatzes sein, in die die Dichtung vorzugsweise über einen in ihr integrierten Metallring einsetzbar ist. Das Einsetzen erfolgt durch eine Art Klipsvorgang, bei dem sich das freie Ende des Fortsatzes des Formkörpers elastisch verformt. Es ist auch möglich, die Schrauben an dieser vormontierten Einheit unter Ausnutzung des Hubes der begrenzten axialen Beweglichkeit soweit vorzudrücken, daß diese mit ihren freien Enden gegenüber der Ebene der Dichtung vorstehen. Die freien Enden können dann einfacher das Gegengewinde im zweiten Teil finden.

Bei den verschiedenen Ausführungsformen kann der Kopf oder der Mittelbund der Schraube einen im Vergleich zum Durchmesser des Schaftes vergrößerten Außendurchmesser und eine damit vergrößerte Auflagefläche für die Kompression des Formkörpers aufweisen. Während üblicherweise zu bestimmten Schaft- bzw. Gewindedurchmessern entsprechend bemessene Kopfweiten oder Kopfbreiten zugeordnet sind, ist der Kopf oder der Mittelbund der Schraube hier mit einem vergrößerten Außendurchmesser versehen, damit auf diese Art und Weise die Auflagefläche am Formkörper vergrößert wird und die Zwischenschaltung einer Unterlegscheibe o. dgl. vermieden wird.

Die Reibflächenpaarung oder die Reibflächenpaarungen können eine Beschichtung aufweisen, die auf dem inneren Umfang des Formkörpers und/oder auf dem äußeren Umfang des Schaftes der Schraube vorgesehen ist. Diese Beschichtung dient dazu, die Reibung der Reibflächenpaarung definiert einzustellen. Auf diese Art und Weise kann eine Sicherung gegen selbsttätiges Losdrehen bereitgestellt werden oder auch nur die von der Reibflächenpaarung zur Verfügung gestellte Reibung in ihrem Wert festgelegt werden. Statt des Aufbringens einer Beschichtung oder zusätzlich zu dieser können die in Kontakt kommenden Oberflächen der Reibflächenpaarung auch unterschiedlich bearbeitet oder ausgebildet werden, also mit entsprechenden Rauhigkeiten versehen werden.

Zwischen dem das Gewinde tragenden Teil des Schaftes und dem gewindelosen Teil des Schaftes der Schraube kann ein Einstich vorgesehen sein. Ein solcher Einstich macht die Anbringung von Fasen am Eingang des Gewindes des zweiten der zu verbindenden Teile überflüssig.

Die Erfindung wird anhand bevorzugter Ausführungsbeispiele des Verbindungselementes weiter beschrieben und erläutert. Es zeigen:
- Figur 1: einen Schnitt durch eine erste Ausführungsform des Verbindungselementes in der Relativlage der Teile vor dem Anziehen der Schraube,
- Figur 2: einen Schnitt durch das Verbindungselement gemäß Figur 1 nach dem Anziehen der Schraube,
- Figur 3: einen Schnitt durch eine zweite Ausführungsform des Verbindungselementes vor dem Anziehen der Schraube,
- Figur 4: einen Schnitt durch das Verbindungselement gemäß Figur 3 nach dem Anziehen der Schraube,
- Figur 5: einen Schnitt durch eine weitere Ausführungsform des Verbindungselementes vor dem Anziehen der Schraube,
- Figur 6: einen Schnitt durch ein weiteres Verbindungselement nach dem Anziehen der Schraube,
- Figur 7: einen Schnitt durch ein weiteres Verbindungselement vor dem Anziehen der Schraube und
- Figur 8: einen Schnitt durch eine weitere Ausführungform des Verbindungselementes nach dem Anziehen der Schraube.

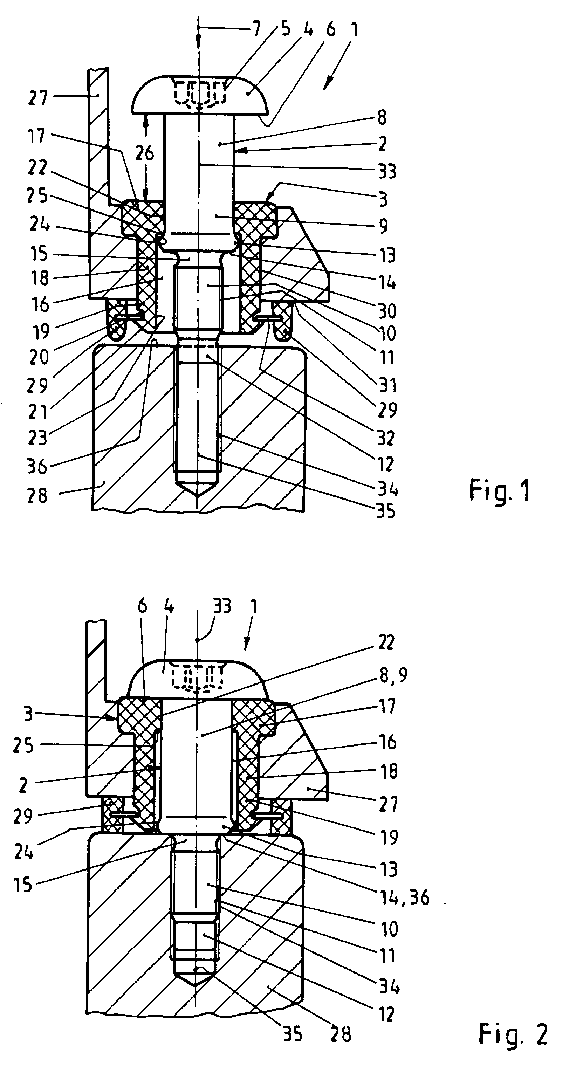

In den Figuren 1 und 2 ist ein Verbindungselement 1 dargestellt, welches aus zwei Teilen besteht, nämlich einer Schraube 2 aus Metall und einem Formkörper 3 aus elastomerem Material, insbesondere Gummi.

Die Schraube 2 weist einen Kopf 4 auf, der mit einer Unrundfläche 5 zum Ansatz eines Schraubwerkzeuges versehen ist. Die Unrundfläche 5 ist hier als Innensechskant ausgebildet. Der Kopf 4 ist relativ breit, also mit relativ großem Durchmesser gestaltet, so daß auf seiner Unterseite eine entsprechend vergrößerte Auflagefläche 6 gebildet ist, die mit dem Formkörper 3 in Wirkkontakt kommt. Im Anschluß an den Kopf 4 in Einschraubrichtung gemäß Pfeil 7 besitzt die Schraube 2 einen Schaft 8, der einen ersten, dem Kopf 4 zugekehrten Teil 9 besitzt, der als glatter Teil ohne Gewinde ausgebildet ist. Der Schaft 8 weist einen zweiten Teil 10 auf, der mit einem Außengewinde 11 versehen ist. Der Schaft 8 geht in ein vorderes freies Ende 12 über, welches zylindrisch gestaltet sein kann, gewindefrei ausgebildet ist und einen Durchmesser aufweist, der den Kerndurchmesser des Außengewindes 11 unterschreitet oder allenfalls erreicht. An dem gewindelos ausgebildeten Teil 9 des Schaftes 8 ist ein angestauchter Wulst 13 vorgesehen, der gegenüber dem sonst glatt durchgehenden Durchmesser des Teiles 9 radial nach außen vorspringt und axial eine Abstützfläche 14 bildet. An diese schließt sich im Übergang zu dem das Außengewinde 11 tragenden Teil 10 ein Einstich 15 an.

Der Formkörper 3 ist als hohler Formkörper mit einer mittigen Durchbrechung 16 versehen, durch die die Schraube 2 hindurchragt. Der Formkörper 3 besitzt einen Flansch 17, einen hülsenartigen Mittelteil 18 und einen Fortsatz 19, der auf der Außenseite im Bereich seines freien Endes mit einer Ausnehmung 20 versehen ist. Die Ausnehmung 20 ist als radial offene umlaufende Nut ausgebildet. Der Fortsatz 19 ist mit einer konischen Schrägfläche 21 versehen.

Zwischen dem zylindrischen Teil 9 des Schaftes 8 der Schraube 2 und dem Innendurchmesser des Flansches 17 des Formkörpers 3 ist eine Reibflächenpaarung 22 vorgesehen bzw. gebildet, die eine gewisse axiale Erstreckung in Richtung des Pfeiles 7 besitzt. Zur Bildung der Reibflächenpaarung 22 sind die in Kontakt stehenden Oberflächen der Schraube 2 und des Formkörpers 3 entsprechend dimensioniert und ausgebildet. Im Anschluß an die Reibflächenpaarung 22 in Richtung des Pfeiles 7 geht die Durchbrechung 16 des Formkörpers 3 stufenartig in einen sich erweiternden Durchmesserabschnitt 23 über. Der Durchmesserabschnitt 23 ist relativ zum Außendurchmesser der Wulst 13 so bemessen, daß hier Spiel vorgesehen sein kann und die Schraube 2 und der Formkörper 3 in diesem Bereich nicht in Anlage zueinander kommen. Der Wulst 13 bildet darüberhinaus einen Anschlag 24, während die Stufe in der Durchbrechung 16 den entsprechenden Gegenanschlag 25 bildet. Wie ersichtlich kann das Verbindungselement 1 als vormontierte Einheit dadurch erstellt werden, daß die Schraube 2 in den Formkörper 3 so eingesteckt wird, wie dies Figur 1 erkennen läßt. Die Schraube 2 ist an dem Formkörper 3 unverlierbar gehalten, und zwar durch die Reibflächenpaarung 22 und durch Anschlag 24 und Gegenanschlag 25. Die Reibflächenpaarung 22 ist so dimensioniert, daß die Schraube 2 in jeder eingesteckten Stellung in dem Formkörper 3 festgehalten wird. Wie ersichtlich, ist die Schraube 2 in eingestecktem Zustand in den Formkörper 3 begrenzt axial beweglich gelagert. Der mögliche Hub 26 der begrenzten axialen Beweglichkeit wird durch den Abstand der Auflagefläche 6 des Kopfes 4 von der Oberfläche des Flansches 17 des Formteils 3 bestimmt. Relativ zum Formkörper 3 gesehen wird der Hub 26 einerseits von dem Anschlag 24 und Gegenanschlag 25 und andererseits von der Auflagefläche 6 festgelegt.

Das Verbindungselement 1 dient zum Verbinden eines ersten Teiles 27 mit einem zweiten Teil 28 unter Zwischenschaltung einer Dichtung 29. Dies ist eine typische Anwendungssituation im Automobilbau. Der zweite Teil 28 kann beispielsweise einen Zylinderkopf darstellen. Der erste Teil 27 wird von einem Zylinderkopfdeckel gebildet. Bei der Dichtung 29 handelt es sich um die üblicherweise zwischen diesen beiden Teilen vorgesehene Dichtung.

Man erkennt, daß der Fortsatz 19 des Formteiles 3 so bemessen ist, daß er in eingesetztem Zustand in eine beispielsweise gestufte Bohrung 30 im ersten Teil 27 über die dem zweiten Teil 28 zugekehrte Oberfläche 31 vorstehend vorragt, so daß die Ausnehmung 20 sich außerhalb des ersten Teiles 27 befindet. Ein in der Dichtung 29 integriert angeordneter Metallring 32 kann, nachdem der Formkörper 3 in die Bohrung 30 des Teiles 27 eingesetzt wurde, über die Schrägfläche 21 so aufgeklipst werden, daß der Metallring 32 in die Ausnehmung 20 eintritt. Die Dichtung 29 ist damit unverlierbar von dem Formkörper 3 gehalten. Es wird eine vormontierbare Einheit aus dem Verbindungselement 1, dem ersten Teil 27 und der Dichtung 29 geschaffen. Im vormontierten Zustand dieser letztlich aus vier Teilen, nämlich der Schraube 2, dem Formkörper 3, dem ersten Teil 27 und der Dichtung 29 bestehenden Einheit wird die begrenzte axiale Verschiebbarkeit der Schraube 2 relativ zum Formkörper 3 nicht behindert. Im Gegenteil, die Schraube 2 kann, wie in Figur 1 dargestellt, entgegen der Richtung des Pfeiles 7 in die eine Endstellung verbracht werden, in der lediglich das freie Ende 12 des Schaftes 8 gegenüber der Dichtung 29 vorsteht. In dieser Stellung (und in jeder anderen Zwischenstellung) wird die Achse 33 der Schraube 2 ausgerichtet zu der damit zusammenfallenden Achse des Formkörpers 3 gehalten. Damit befindet sich das freie Ende 12 der Schraube 2 ausgerichtet in einer solchen Stellung, daß das vordere Ende 12 der Schraube 2 beim Aufsetzen der vormontierten Einheit aus den vier Teilen auf den zweiten Teil 28 ein in diesem vorgesehenes Gegengewinde 34 mit seiner Achse 35 leichter findet, so daß dieser Ansatzvorgang und das nachfolgende Anziehen der Schraube 2 auch von einem Roboter durchgeführt werden kann. Auch ein mehrspindliger Schrauber kann eingesetzt werden, um mehrere derartige Verbindungselemente 1, die in entsprechendem Abstand über den abzudichtenden Umfang des Teiles 28 verteilt angeordnet sind, zugleich anzuziehen. Dabei setzt sich während des Anziehvorganges die Dichtung 29 auf die Oberfläche 36 des Teiles 28 auf. Die Oberfläche 36 bildet zugleich eine Gegenfläche für die Abstützfläche 14 der Wulst 13, so daß der Anziehvorgang der Schraube 2 durch das reproduzierbare Aufsetzen der Anlagefläche 14 auf der Oberfläche 36 beendet wird, wie dies Figur 2 zeigt. Dabei ist die Schraube 2 so bemessen, daß sich zugleich die Auflagefläche 6 des Kopfes 4 auf die Oberfläche des Flansches 17 des Formteiles 3 aufsetzt und den Formkörper 3 entsprechend zusammendrückt, also komprimiert. Insoweit wird das erste Teil 27 damit schallentkoppelt von dem Teil 28 an diesem festgespannt gehalten. Der Wulst 13 tritt, wie Figur 2 erkennen läßt, in dieser End-Einschraubstellung dem freien Ende des Fortsatzes 19 gegenüber und verhindert, daß der Metallring 32 aus der Ausnehmung 20 herausrutschen kann.

Die Reibflächenpaarung 22 ist über den gesamten Hub 26 wirksam, um einerseits die Schraube 2 in jeder Zwischenstellung festzuhalten und andererseits in jeder Zwischenstellung die Achse 33 der Schraube 2 ausgerichtet zu halten. Anhand von Figur 2 ist vorstellbar, daß ein Lösen der Schraube 2 durch entsprechenden Kraftangriff an der Unrundfläche 5 im Lösesinne möglich ist, wobei sich die Schraube 2 entgegengesetzt zum Pfeil 7 bewegt. Hierdurch wird die unverlierbare Lagerung der Dichtung 29 an dem Formkörper 3 jedoch nicht aufgehoben oder beeinträchtigt. Die Schraube 2 ist am Formkörper 3 auch nach dem völligen Losschrauben unverlierbar gehalten. Sie kann aber andererseits aus dem Formkörper 3 auch gänzlich herausgezogen werden, wenn beispielsweise die Schraube 2 und/oder der Formkörper 3 ausgetauscht werden sollen. Bei einem Austausch des Formkörpers 3 versteht es sich, daß die Dichtung 29 zunächst von diesem gelöst werden muß.

Die Reibflächenpaarung 22 ist so ausgebildet, daß diese unabhängig von der Relativlage der Achse 33 des Verbindungselementes 1 zur Wirklinie der Schwerkraft die Schraube 2 in jeder Zwischenstellung des Hubes 26 festhält und ausgerichtet präsentiert. Dies ist insbesondere bei einer Überkopfmontage oder bei einer Schrägstellung sehr nützlich.

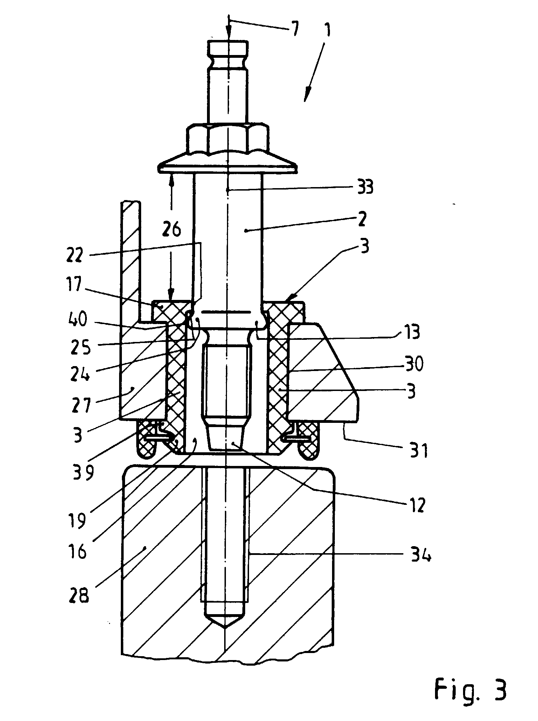

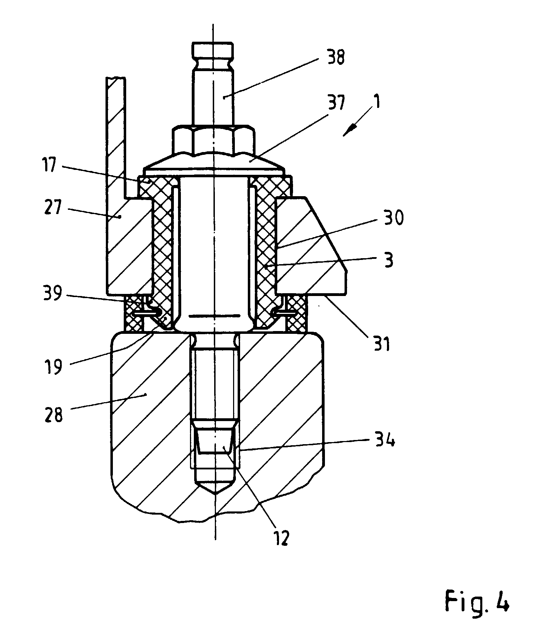

Das in den Figuren 3 und 4 dargestellte weitere Ausführungsbeispiel des Verbindungselementes 1 gleicht in weiten Teilen dem Ausführungsbeispiel gemäß den Figuren 1 und 2, so daß nachfolgend nur die Unterschiede beschrieben werden. Die Schraube 2 besitzt anstelle eines Kopfes 4 einen Mittelbund 37, der auf seiner Unterseite die Auflagefläche 6 bildet, ansonsten aber entgegengesetzt zum Pfeil 7 in einen Bolzen 38 übergeht, der für die verschiedensten Zwecke vorgesehen sein kann. Beispielsweise gestattet dieser Bolzen 38 die Lagerung eines Halters für ein Kabel o. dgl..

Der Formkörper 3 ist in eine durchgehende Bohrung 30 im ersten Teil 27 so eingesetzt, daß sein Flansch 17 sich außerhalb der Bohrung 30 befindet. Aber auch hier ragt der Fortsatz 19 über die Oberfläche 31 vor und ist mit einer radial nach außen abstehenden Rippe 39 am Teil 27 gehalten.

Die Reibflächenpaarung 22 besitzt hier eine im Vergleich zum Ausführungsbeispiel der Figuren 1 und 2 verringerte axiale Länge. Sie wird ergänzt durch eine zweite Reibflächenpaarung 40. Zu diesem Zweck ragt der Wulst 13 der Schraube 2 radial weiter nach außen, so daß das Spiel zu der Durchbrechung 16 bzw. dem Durchmesserabschnitt 23 beseitigt ist und Schraube 2 und Formkörper 3 auch im Bereich dieser zweiten Reibflächenpaarung 40 über den gesamten Hub 26 miteinander in Kontakt sind. Auch die zweite Reibflächenpaarung 40 weist eine ähnlich geringe axiale Erstreckung wie die Reibflächenpaarung 22 auf. Die beiden Reibflächenpaarungen 22 und 40 erfüllen hier gemeinsam das Festhalten der Schraube 2 relativ zum Formkörper 3 in jeder Zwischenstellung des Hubes 26. Außerdem vergrößern die beiden Reibflächenpaarungen 22 und 40 ihren gegenseitigen Abstand beim Einschieben der Schraube 2 relativ zum Formkörper 3 in Richtung des Pfeiles 7, so daß die Ausrichtwirkung auf die Achse 33 der Schraube 2 noch verbessert wird.

Das freie Ende 12 der Schraube 2 ist hier kegelstumpfförmig ausgebildet, damit beim Einschieben der Schraube 2 Toleranzen leichter überbrückt und eine weitere Ausrichtwirkung beim Finden der Ausnehmung des Gegengewindes 34 ausgenutzt wird. Der Wulst 13 bildet auch hier den Anschlag 24, der im Zusammenhang mit dem Gegenanschlag 25 einerseits den Hub 26 begrenzt und andererseits zusammen mit den beiden Reibflächenpaarungen 22 und 40 die Unverlierbarkeit der in den Formkörper 3 eingesteckten Schraube 2 garantiert.

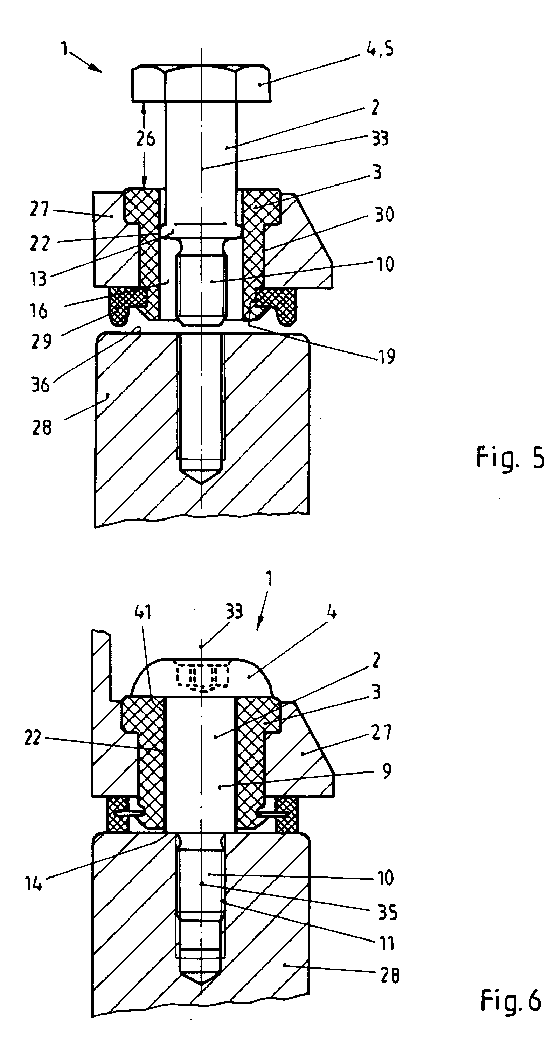

Bei dem Ausführungsbeispiel der Figur 5 ist hingegen auf den Anschlag 24 und den Gegenanschlag 25 verzichtet. Der Wulst 13 ist hier in Form eines zylindrischen Abschnittes am Schaft 8 vorgesehen und arbeitet mit einer nicht gestuften Durchbrechung 16 im Formkörper 3 zusammen. Die auf diese Weise gebildete einzige Reibflächenpaarung 22 erfüllt hier drei Funktionen. Sie hält die Schraube 2 in jeder Zwischenstellung fest. Sie erfüllt die Ausrichtwirkung für die Achse 33 in jede Stellung, und sie garantiert, solange die Reibung wirksam ist, die Unverlierbarkeit der Schraube 2 gegenüber dem Formkörper 3. Freilich kann die Schraube 2 auch gänzlich aus dem Formkörper herausgezogen werden. Dies ist aber auch bei Überwindung des Anschlages 24 und des Gegenanschlages 25 bei den vorangehenden Ausführungsbeispielen möglich. Die Schraube 2 endet frei mit dem Teil 10, welches das Außengewinde trägt. Eine Fase kann zu Einfädelungszwecken vorgesehen sein. Die Dichtung 29 besitzt keinen integrierten Metallring 32, sondern ist direkt in die mit vergrößertem Querschnitt ausgebildete Ausnehmung 19 eingeklipst. Der Kopf 4 der Schraube 2 weist als Unrundfläche 5 eine Sechskantgestaltung auf.

Das Verbindungselement gemäß Figur 5 läßt sich in gleicher Weise, wie es anhand der zuvor beschriebenen Ausführungsbeispiele erläutert wurde, handhaben. Es kann eine erste vormontierte Einheit aus der Schraube 2 und dem Formkörper 3 gebildet werden. Es kann eine zweite vormontierte Einheit aus Schraube 2, Formkörper 3, Teil 27 und Dichtung 29 gebildet werden. Der Hub 26 kann so in seiner axialen Länge bemessen sein, daß das vordere freie Ende der Schraube 2 hinter die vordere Aufsetzfläche der Dichtung 29 auf der Oberfläche 36 zurücktritt. Damit die Oberfläche 36 bei einem nicht positionsgenauen Aufsetzvorgang der Einheit aus den vier Teilen nicht beschädigt oder beeinträchtigt wird.

Das Ausführungsbeispiel des Verbindungselementes 1 gemäß Figur 6 weist im Bereich des Formkörpers eine nicht gestuft durchgehende Durchbrechung 16 auf, wie es an dem Ausführungsbeispiel der Figur 5 bereits erläutert wurde. Es ist hier jedoch eine einzige Reibflächenpaarung 22 (oder auch zwei unmittelbar aneinander anschließende Reibflächenpaarungen 22 und 40) vorgesehen, die sich über die gesamte Höhe der jeweiligen Kontaktflächen erstrecken. Auf einen Wulst 13, der radial nach außen vorsteht, ist hier verzichtet. Die Abstützfläche 14 wird von einer Stufe am Übergang des komplett zylindrischen Teils 9 zu dem mit Außengewinde 11 versehenen Teil 10 des Schaftes 8 gebildet. Eine oder beide Oberflächen, die die Reibflächenpaarung 22 bilden, dann ganz oder teilweise mit einer Beschichtung 41 versehen sein, die einerseits die Reibung in der Reibflächenpaarung 22 erhöht und andererseits eine gewisse Sicherung gegen unbeabsichtigtes Losdrehen der angezogenen Schraube darstellt. In Verbindung damit kann durch die Kompression des Formkörpers 3 in der angezogenen Stellung ein fester Sitz des Formkörpers 3 im ersten Teil 27 erreicht werden, so daß die Beschichtung 41 insoweit in der beschriebenen Art und Weise wirksam werden kann. Bei dieser Ausführungsform besteht der Nachteil, daß die Reibung der Reibflächenpaarung 22 je nach der wirksamen Länge der Kontaktflächen über den Hub 26 der begrenzten axialen Beweglichkeit veränderlich ist. Dies kann jedoch in Kauf genommen werden, und durch entsprechende geometrische Gestaltung kann darauf hingewirkt werden, daß die Schraube 2 auch in weitgehend herausgezogenem Zustand am Formkörper 3 noch sicher und verläßlich gehalten ist und dadurch die Unverlierbarkeit garantiert wird. Statt der Beschichtung 41 kann auch die eine oder auch beide Kontaktflächen mit entsprechender Rauhigkeit versehen sein.

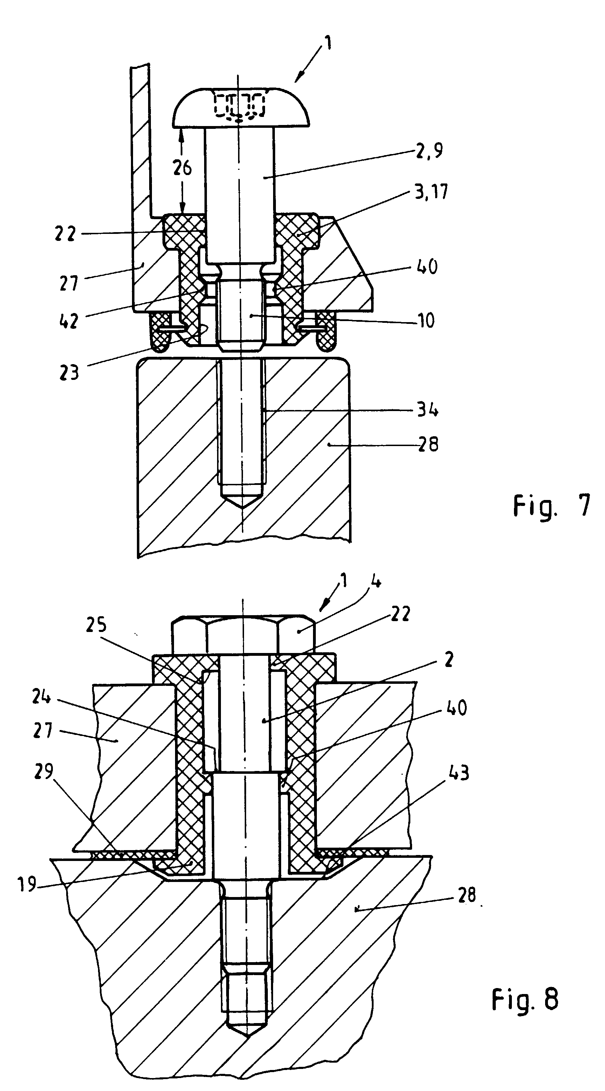

Das Ausführungsbeispiel des Verbindungselementes gemäß Figur 7 kennzeichnet sich dadurch, daß der Wulst 13 wiederum in Fortfall kommt und die erste Reibflächenpaarung 22 über den gesamten Hub 26 der begrenzten axialen Beweglichkeit zwischen Schraube 2 und Formkörper 3 wirksam ist. Der Formkörper 3 besitzt im Bereich des Zylinderabschnittes 23 einen Vorsprung 42, dessen Innendurchmesser dem Innendurchmesser des Flansches 17 entspricht, so daß erst nach dem Zurücklegen eines Teils des Hubes 26 beim Einschiebvorgang eine zweite Reibflächenpaarung 40 zwischen dem Vorsprung 42 und dem Teil 9 des Schaftes gebildet wird und in Funktion tritt. Der gegenseitige Abstand der beiden Reibflächenpaarungen 22 und 40 bleibt während der Einschubwirkung konstant. Die geometrische Gestaltung kann so getroffen sein, daß die sprunghafte Zunahme der Reibung durch das Wirksamwerden der zweiten zusätzlichen Reibflächenpaarung 40 dem Benutzer anzeigt, daß das freie Ende des Schaftes 8 der Schraube 2 in die Ausnehmung des Gegengewindes 34 eintritt und damit unter verbesserter Ausrichtwirkung das Einfädeln der Schraube 2 im zweiten Teil 28 stattgefunden hat.

Die Ausführungsform gemäß Figur 8 kennzeichnet sich dadurch, daß die beiden Reibflächenpaarungen 22 und 40 während der gesamten Einschubbewegung der Schraube 2 in den Formkörper 3 wirksam sind. Zu diesem Zweck ist der Teil 9 des Schaftes 8 in zwei etwa gleich lange Teile unterteilt, die auch im Durchmesser so abgesetzt sind, wie dies Figur 8 zeigt. Die entsprechenden Kontaktflächen am Formkörper 3, die die erste Reibflächenpaarung 22 und die zweite Reibflächenpaarung 40 bilden, sind entsprechend ausgebildet und angeordnet. Hier ist zusätzlich auf die Anordnung des Anschlages 24 und des Gegenanschlages 25 zurückgegriffen, um die Unverlierbarkeit auf diese Weise zu gewährleisten. Die Dichtung 29 ist hier als Flachdichtung ausgebildet und wird von dem freien Ende des Fortsatzes 19 des Formkörpers 3 aufgenommen. Im Teil 28 ist eine entsprechende Einsenkung 43 vorgesehen, in der der überstehende Fortsatz 19 des Formteiles 3 aufgenommen wird.

### BEZUGSZEICHENLISTE

- 1 -: Verbindungselement
- 2 -: Schraube
- 3 -: Formkörper
- 4 -: Kopf
- 5 -: Unrundfläche
- 6 -: Auflagefläche
- 7 -: Pfeil
- 8 -: Schaft
- 9 -: Teil
- 10 -: Teil
- 11 -: Außengewinde
- 12 -: freies Ende
- 13 -: Wulst
- 14 -: Abstützfläche
- 15 -: Einstich
- 16 -: Durchbrechung
- 17 -: Flansch
- 18 -: Mittelteil
- 19 -: Fortsatz
- 20 -: Ausnehmung
- 21 -: Schrägfläche
- 22 -: Reibflächenpaarung
- 23 -: Durchmesserabschnitt
- 24 -: Anschlag
- 25 -: Gegenanschlag
- 26 -: Hub
- 27 -: erster Teil
- 28 -: zweiter Teil
- 29 -: Dichtung
- 30 -: Bohrung
- 31 -: Oberfläche
- 32 -: Metallring
- 33 -: Achse
- 34 -: Gegengewinde
- 35 -: Achse
- 36 -: Oberfläche
- 37 -: Mittelbund
- 38 -: Bolzen
- 39 -: Rippe
- 40 -: Reibflächenpaarung
- 41 -: Beschichtung
- 42 -: Vorsprung
- 43 -: Einsenkung

## Patentansprüche

1. Schallentkoppelndes Verbindungselement (1) für zwei Teile (27, 28) unter Zwischenschaltung einer Dichtung (29), insbesondere zur Befestigung eines Zylinderkopfdeckels auf einem Zylinderkopf, mit einer einen Kopf (4) oder einen Mittelbund (37) aufweisenden Schraube (2), die eine Unrundfläche (5) zum Ansatz eines Schraubwerkzeuges, einen Schaft (8) mit einem Gewindeabschnitt (10, 11) und eine sich radial erstreckende und in der End-Einschraubstellung auf eine Gegenfläche, insbesondere am Zylinderkopf, anlegende Abstützfläche (14) aufweist, und mit einem schallisolierenden hülsenartigen Formkörper (3) aus elastomerem Material, wobei der Formkörper (3) an der Schraube (2) in vormontiertem Zustand des Verbindungselements (1) vorzugsweise über einen Anschlag (24) und einen Gegenanschlag (25) begrenzt axial beweglich und dabei doch unverlierbar gehalten ist, dadurch gekennzeichnet, daß der Formkörper (3) eine solche axiale Länge aufweist, daß er im in das erste Teil (27) eingesetzten Zustand mit einem an ihm vorgesehenen Fortsatz (19) das erste Teil (27) in Richtung auf die Dichtung (29) überragt, daß der Fortsatz (19) des Formkörpers (3) eine Ausnehmung (20) zum unverlierbaren Einsetzen der Dichtung (29) aufweist, und daß zwischen dem Formkörper (3) und der Schraube (2) mindestens eine Reibflächenpaarung (22) vorgesehen ist, die über den Hub (26) der axial begrenzten Beweglichkeit die Schraube (2) in jeder Stellung festhält und ausrichtet.

2. Verbindungselement nach Anspruch 1, dadurch gekennzeichnet, daß die Reibflächenpaarung (22) zum nachgiebigen Ausrichten der Achse (33) der Schraube (2) und zum Festhalten in jeder Stellung eine gewisse axiale Erstreckung aufweist.

3. Verbindungselement nach Anspruch 1 oder 2, dadurch gekennzeichnet, daß zwischen dem Formkörper (3) und der Schraube (2) eine zweite Reibflächenpaarung (40) vorgesehen ist.

4. Verbindungselement nach einem der Ansprüche 1 bis 3, dadurch gekennzeichnet, daß die Schraube (2) etwa im Mittelbereich ihres Schaftes (8) einen angestauchten Wulst (13) aufweist, der einerseits einen Bestandteil der Reibflächenpaarung (22 oder 40) und andererseits die Abstützfläche (14) für die reproduzierbare End-Einschraubstellung bildet.

5. Verbindungselement nach einem der Ansprüche 1 bis 3, dadurch gekennzeichnet, daß die Schraube (2) etwa im Mittelbereich ihres Schaftes (8) einen eine Stufe bildenden Absatz aufweist, der die Abstützfläche (14) bildet.

6. Verbindungselement nach einem der Ansprüche 1 bis 5, dadurch gekennzeichnet, daß der Hub (26) der begrenzten axialen Beweglichkeit zwischen Schraube (2) und Formkörper (3) größer als die Einschraublänge der Schraube (2) ausgebildet ist.

7. Verbindungselement nach einem der Ansprüche 1 bis 6, dadurch gekennzeichnet, daß die Ausnehmung (20) am Formkörper (3) eine umlaufende radial nach außen offene Rille auf dem Außenumfang des Fortsatzes (19) ist, in die die Dichtung (29) vorzugsweise über einen in ihr integrierten Metallring (32) einsetzbar ist.

8. Verbindungselement nach einem der Ansprüche 1 bis 7, dadurch gekennzeichnet, daß der Kopf (4) oder der Mittelbund (37) der Schraube (2) einen im Vergleich zum Durchmesser des Schaftes (8) vergrößerten Außenduchmesser und eine damit vergrößerte Auflagefläche (6) für die Kompression des Formkörpers (3) aufweist.

9. Verbindungselement nach einem der Ansprüche 1 bis 8, dadurch gekennzeichnet, daß die Reibflächenpaarung (22) oder die Reibflächenpaarungen (22, 40) eine Beschichtung (41) aufweisen, die auf dem inneren Umfang des Formkörpers (3) und/oder auf dem äußeren Umfang des Schaftes (8) der Schraube (2) vorgesehen ist.

10. Verbindungselement nach einem der Ansprüche 1 bis 9, dadurch gekennzeichnet, daß zwischen dem das Gewinde (11) tragenden Teil (10) des Schaftes (8) und dem gewindelosen Teil (9) des Schaftes (8) der Schraube (2) ein Einstich (15) vorgesehen ist.

## Claims

1. A connection element (1) for two parts (27, 28) for decoupling of sound, with a gasket (29) inserted in between, especially for the fastening of a cylinder head cover to a cylinder head, with a screw (2) having a head (4) or a center collar (37), which has a non-circular surface (5) for the fitting of a spanner, a shaft (8) with a threaded section (10, 11), and a support area (14) which extends radially and rests upon a counter area, especially on the cylinder head, in the end-mounted position, and with a sound insulating sleeve-like formed body (3) made of an elastomer material, where the formed body (3) is held to the screw (2) in the premounted state of the connection element (1) preferably by a stop (24) and a counter-stop (25) with limited axial movement, but so that it cannot be lost, **wherein** the formed body (3) has such an axial length that it protrudes the first part (27) in the direction of the gasket (29) with a continuation (19) provided thereon in the state in which it is mounted in the first part (27), that the continuation (19) of the formed body (3) has a recess (20) for mounting the gasket (29) so that it cannot be lost, and that at least one friction area pairing (22) is provided between the formed body (3) and the screw (2), which holds and aligns the screw (2) in every position by the lift (26) of the limited axial movement.

2. The connection element of claim 1, **wherein** the friction area pairing (22) has a certain axial extension for the compliant alignment of the axis (33) of the screw (2) and for holding it in every position.

3. The connection element of claim 1 or 2, **wherein** a second friction area pairing (40) is provided between the formed body (3) and the screw (2).

4. The connection element of one of the claims 1 to 3, **wherein** the screw (2) has an upset swelling (13), which on the one hand is a part of the friction area pairing (22 or 40) and which on the other hand forms the support area (14) for the reproducible end-mounted position, approximately in the middle region of its shaft (8).

5. The connection element of one of the claims 1 to 3, **wherein** the screw (2) has shoulder forming a step, which forms the support area (14), approximately in the middle region of its shaft (8).

6. The connection element of one of the claims 1 to 5, **wherein** the lift (26) of the limited axial movement between the screw (2) and the formed body (3) is formed to be larger than the screw-in length of the screw (2).

7. The connection element of one of the claims 1 to 6, **wherein** the recess (20) on the formed body (3) is a surrounding groove radially open towards the outside on the outer perimeter of the continuation (19), into which the gasket (29), preferably by a metal ring (32) integrated therein, can be inserted.

8. The connection element of one of the claims 1 to 7, **wherein** the head (4) or the center collar (37) of the screw (2) has an enlarged outer diameter as compared to the diameter of the shaft (8) and therefore an enlarged bearing area (6) for the compression of the formed body (3).

9. The connection element of one of the claims 1 to 8, **wherein** the friction area pairing (22) or the friction area pairings (22, 40) have a coating (41), which is provided on the inner circumference of the formed body (3) and/or on the outer circumference of the shaft (8) of the screw (2).

10. The connection element of one of the claims 1 to 9, **wherein** a turned groove (15) is provided between the part (10) of the shaft (8) having the thread (11) and the threadless part (9) of the shaft (8) of the screw (2).

## Revendications

1. Elément de liaison (1) de désaccouplement du bruit pour deux éléments (27, 28) par insertion d'une étanchéité (29), en particulier pour la fixation d'un couvercle de culasse sur une culasse, avec une vis (2) présentant une tête (4) ou un épaulement médian (37), qui présente une surface non circulaire (5) pour la mise en place d'un outil de vissage, une tige (8) avec une partie filetée (10, 11) et une surface d'appui (14) s'étendant radialement et s'appliquant dans la position finale de vissage sur une contre-surface, en particulier sur la culasse, et comportant un corps de forme (3) du type d'une douille isolant du bruit en matière élastomère, dans lequel le corps de forme (3) est maintenu axialement mobile de manière limitée et cependant imperdable contre la vis (2), à l'état prémonté de l'élément de liaison (1), de préférence par l'intermédiaire d'une butée (24) et d'une contre-butée (25), caractérisé en ce que le corps de forme (3) présente une longueur axiale telle que dans l'état, inséré dans le premier élément (27), avec un prolongement (19), prévu sur celui-ci, le premier élément (27) dépasse en direction de l'étanchéité (29), en ce que le prolongement (19) du corps de forme (3) présente un évidement (20) pour l'insertion imperdable de l'étanchéité (29), et en ce qu'entre le corps de forme (3) et la vis (2) il est prévu au moins une paire de surfaces de friction (22), qui, par la course (26) de la mobilité axialement limitée, fixe et oriente la vis (2) dans toute position.

2. Elément de liaison selon la revendication 1, caractérisé en ce que la paire de surfaces de friction (22) présente une certaine extension axiale pour l'orientation souple de l'axe (33) de la vis (2) et pour la fixation dans toute position.

3. Elément de liaison selon la revendication 1 ou 2, caractérisé en ce qu'entre le corps de forme (3) et la vis (2) il est prévu une deuxième paire de surfaces de friction (40).

4. Elément de liaison selon l'une des revendications 1 à 3, caractérisé en ce que la vis (2) présente, à peu près dans la zone centrale de sa tige (8), un bourrelet (13) refoulé, qui forme d'une part une partie intégrante de la paire de surfaces de friction (22 ou 40) et d'autre part la surface d'appui (14) pour la position finale de vissage reproductible.

5. Elément de liaison selon l'une des revendications 1 à 3, caractérisé en ce que la vis (2) présente, à peu près dans la zone centrale de sa tige (8), un épaulement formant un gradin, qui forme la surface d'appui (14).

6. Elément de liaison selon l'une des revendications 1 à 5, caractérisé en ce que la course (26) de la mobilité axiale limitée entre la vis (2) et le corps de forme (3) est supérieure à la longueur de vissage de la vis (2).

7. Elément de liaison selon l'une des revendications 1 à 6, caractérisé en ce que l'évidement (20) sur le corps de forme (3) est une gorge périphérique, ouverte radialement vers l'extérieur, sur le pourtour extérieur du prolongement (19), dans laquelle peut être insérée l'étanchéité (29), de préférence par une bague métallique (32) intégrée dans celle-ci.

8. Elément de liaison selon l'une des revendications 1 à 7, caractérisé en ce que la tête (4) ou l'épaulement médian (37) de la vis (2) présente un diamètre extérieur plus grand que le diamètre de la tige (8) et une surface de support (6) donc agrandie pour la compression du corps de forme (3).

9. Elément de liaison selon l'une des revendications 1 à 8, caractérisé en ce que la paire de surfaces de friction (22) ou les paires de surfaces de friction (22, 40) présentent une couche de revêtement (41), qui est prévue sur le pourtour intérieur du corps de forme (3) et/ou sur le pourtour extérieur de la tige (8) de la vis (2).

10. Elément de liaison selon l'une des revendications 1 à 9, caractérisé en ce qu'entre la partie (10) de la tige (8), portant le filetage (11) et la partie (9) sans filetage de la tige (8) de la vis (2), il est prévu une entaille (15).
